# EUROPÄISCHE PATENTSCHRIFT

(11) **EP 3 373 093 B1**
(45) Veröffentlichungstag und Bekanntmachung des Hinweises auf die Patenterteilung: **08.05.2019**
(21) Anmeldenummer: 17159855.0
(22) Anmeldetag: 08.03.2017
(51) Int. Cl.: G08G 1/16, H04W 4/80, H04W 4/44, G05D 1/02

(54) **FAHRERLOSES TRANSPORTSYSTEM**
DRIVERLESS TRANSPORT SYSTEM
SYSTÈME DE TRANSPORT SANS CONDUCTEUR

(43) Veröffentlichungstag der Anmeldung: 12.09.2018
(73) Patentinhaber: SICK AG, 79183 Waldkirch/Breisgau (DE)
(72) Erfinder: DOLD, Franz, 78120 Furtwangen (DE)
(74) Vertreter: Manitz Finsterwald Patent- und Rechtsanwaltspartnerschaft mbB

(56) Entgegenhaltungen:
- US-A- 6 049 745
- US-A1- 2007 152 845
- US-A1- 2009 012 882
- US-A1- 2014 375 431

## Beschreibung

Die vorliegende Erfindung betrifft ein fahrerloses Transportsystem zum Transport von Waren und/oder Personen, welches mehrere fahrerlose Fahrzeuge und zumindest eine stationäre Überwachungseinrichtung zur Überwachung eines jeweiligen Fahrwegbereiches umfasst, wobei die Überwachungseinrichtung wenigstens einen Sensor, der dazu eingerichtet ist die Anwesenheit von Objekten in dem Fahrwegbereich zu detektieren und ein Erfassungssignal auszugeben, wenn sich ein Objekt in dem Fahrwegbereich befindet, und eine mit dem Sensor verbundene Steuereinheit umfasst, welche dazu eingerichtet ist, das Erfassungssignal von dem Sensor zu empfangen und auf der Grundlage zumindest des Erfassungssignals ein Steuersignal für zumindest eines der fahrerlosen Fahrzeuge zu erzeugen.

Fahrerlose Transportsysteme werden beispielsweise in industriellen Umgebungen wie Fertigungshallen, Lagerhallen, Lagerflächen und/oder sonstigen Umgebungen sowohl innerhalb als auch außerhalb von Gebäuden eingesetzt, um Güter innerhalb dieser Umgebung zu transportieren. Auch ein Einsatz von fahrerlosen Transportsystemen zum Transport von Personen in öffentlichen und/oder nicht öffentlichen Verkehrsnetzen rückt zunehmend in den Fokus.

Eine Navigation der fahrerlosen Fahrzeuge kann in an sich bekannter Weise mit Hilfe von Steuersystemen erfolgen, die beispielsweise im Fahrzeug vorhanden sind und/oder mit dem Fahrzeug über eine geeignete Kommunikationsverbindung kommunizieren können, wobei ein derartiges Steuersystem einerseits mit einem oder mehreren Sensoren zur Positionsbestimmung des Fahrzeugs verbunden sein kann und andererseits mit entsprechenden Antriebs- und Lenksystemen des Fahrzeugs kommunizieren kann, um das Fahrzeug durch die Umgebung zu navigieren.

Die Fahrzeuge können mit geeigneten Überwachungssensoren zur Vermeidung von Kollisionen mit Personen, feststehenden Hindernissen oder anderen Fahrzeugen ausgerüstet sein. Allerdings sind derartige mitfahrende Überwachungssensoren nicht in jeder Situation ausreichend, da nicht immer alle Fahrwegbereiche von den mitfahrenden Überwachungssensoren eingesehen werden können. Insbesondere an Kreuzungen, in deren Bereich Gebäude oder sichtbehindernde Hindernisse stehen, besteht die Gefahr, dass Fahrzeuge oder Personen, die den vorgesehenen Fahrweg eines fahrerlosen Fahrzeugs kreuzen, nicht oder nicht rechtzeitig erfasst werden.

Um derartige Gefahren zu verringern, müssen die Fahrzeuge mit großem Abstand zu Hindernissen, welche den Blickwinkel der Überwachungssensoren einschränken könnten, gesteuert werden und/oder mit entsprechend niedriger Fahrzeuggeschwindigkeit bewegt werden, so dass bei einem plötzlichen Auftauchen von Hindernissen das fahrerlose Fahrzeug zur Kollisionsvermeidung rechtzeitig abgebremst werden kann.

Hierdurch wird jedoch die Leistungsfähigkeit des Transportsystems eingeschränkt.

Eine erste Verbesserung kann dadurch erreicht werden, dass unübersichtliche Fahrwegbereiche durch stationäre Überwachungseinrichtungen, beispielsweise Laserscanner, überwacht werden. Die stationären Überwachungseinrichtungen können beispielsweise an Gebäudeecken oder Hindernisecken angeordnet werden, so dass das Entstehen von toten Winkeln weitgehend vermieden wird.

Wenn eine solche stationäre Überwachungseinrichtung ein Objekt, beispielsweise eine Person oder ein anderes Fahrzeug, in dem überwachten Fahrwegbereich detektiert, kann an das fahrerlose Fahrzeug ein Steuersignal übermittelt werden, welches das Steuersystem des Fahrzeugs so beeinflusst, dass eine Kollision vermieden wird.

Wenn die stationäre Überwachungseinrichtung ein Objekt in dem Fahrbereich detektiert, ist es jedoch oft schwierig oder unmöglich zu unterscheiden, ob es sich bei dem Objekt um eine Person oder ein Fahrzeug handelt. Wenn nämlich eine potentielle Gefahr einer Mensch-Fahrzeug-Kollision besteht, darf das Fahrzeug in den Fahrwegbereich nicht einfahren, solange die gefährdete Person nicht durch den Überwachungssensor des Fahrzeugs erkennbar ist. Wenn es sich jedoch bei dem detektierten Objekt um ein weiteres Fahrzeug handelt und lediglich die Gefahr einer Fahrzeug-Fahrzeug-Kollision besteht, darf das eine Fahrzeug in den Fahrwegbereich einfahren, wenn sichergestellt ist, dass das andere Fahrzeug steht.

In US 6,049,745 A ist ein Verfahren und ein System zur Navigation von autonom fahrenden Fahrzeugen beschrieben, bei denen die Navigation mithilfe einer Vielzahl von entlang eines Fahrwegs der Fahrzeuge angeordneten RFID-Tags erfolgt.

US 2009/012882 A1 offenbart ein Lagersystem, bei dem mit RFID-Tags versehene Transportgüter mittels fahrerloser Fahrzeuge innerhalb eines Betriebsbereichs transportiert werden. Das System umfasst Sensoren wie beispielsweise Infrarotsensoren sowie RFID-Lesegeräte, welche RFID-Signale von den an den Transportgütern angeordneten RFID-Tags empfangen können. Die Sensoren bzw. Lesegeräte sind mit einer Steuereinheit verbunden, welche auf der Grundlage der von den IR-Sensoren empfangenen Signale einzelne RFID-Lesegeräte derart aktivieren oder deaktivieren kann, dass Interferenzen zwischen benachbarten Lesegeräten vermieden werden können. Die Steuereinheit kann auch Steuerbefehle an die Fahrzeuge übermitteln.

Es ist die Aufgabe der vorliegenden Erfindung ein fahrerloses Transportsystem der eingangs genannten Art anzugeben, dass eine verbesserte Unterscheidung und/oder Identifikation von erfassten Objekten gewährleistet.

Die Lösung erfolgt durch ein fahrerloses Transportsystem mit den Merkmalen des Anspruchs 1.

Es ist vorgesehen, dass zumindest eines der fahrerlosen Fahrzeuge einen RFID-Transponder umfasst, welcher dazu eingerichtet ist, ein Transpondersignal zu übertragen, welches zumindest eine fahrzeugspezifische Kennung umfasst, und dass die Überwachungseinrichtung ferner zumindest ein mit der Steuereinheit verbundenes RFID-Lesegerät umfasst, welches zum Empfangen eines von dem RFID-Transponder übertragenen Transpondersignals eingerichtet ist, wobei die Steuereinheit dazu eingerichtet ist, das Steuersignal ferner auf der Grundlage des empfangenen Transpondersignals zu erzeugen.

Die Steuereinheit ist dazu ausgelegt, ein von dem Sensor, beispielsweise einem Laserscanner, erzeugtes Erfassungssignal mit einem empfangenen Transpondersignal zu verknüpfen. Wenn etwa von einem erfassten Objekt zugleich ein Transpondersignal empfangen wird, geht die Überwachungseinrichtung davon aus, dass es sich bei dem erfassten Objekt um ein Fahrzeug handelt. Wird ein entsprechendes Transpondersignal jedoch nicht empfangen oder stimmt der Bereich, aus dem das Transpondersignal empfangen wurde, nicht mit dem Bereich, in welchem der Sensor das Objekt detektiert hat, überein, so wird angenommen, dass es sich bei dem durch den Sensor erfassten Objekt um eine Person handeln muss. Die Überwachungseinrichtung bzw. deren Steuereinheit kann auf der Grundlage dieser Identifikation oder Unterscheidung entsprechende restriktive oder permissive Steuerbefehle aussenden, beispielsweise Befehle zum Anhalten oder Ausweichen, Fahrtfreigaben, Lenkbefehle und/oder Geschwindigkeitsbeschränkungen.

Bei den genannten Fahrwegbereichen kann es sich beispielsweise um Kreuzungen oder Einmündungen von Fahrwegen oder Fahrstraßen und/oder um Haltebereiche wie Beladungsstationen oder Parkbuchten handeln. Der zu überwachende Fahrwegbereich kann nicht nur einen unmittelbaren Gefahrenbereich, etwa die eigentliche Kreuzungsfläche, sondern auch einen oder mehrere Annäherungsbereiche umfassen, die z.B. von einem fahrerlosen Fahrzeug aus schlecht einsehbar oder überwachbar sind und/oder die als Anhalte- oder Bremsweg für die Fahrzeuge benötigt werden, um Kollisionen zu verhindern.

Als Sensoren der stationären Überwachungseinrichtung können beispielsweise optoelektronische Sensoren wie Laserscanner, Lichtschranken, Lichtgitter oder dergleichen oder Radarsensoren eingesetzt werden. Die Sensoren können mit der Steuereinheit drahtlos oder leitungsgebunden verbunden sein.

Bei einem erfindungsgemäßen fahrerlosen Transportsystem sind mehrere fahrerlose Fahrzeuge vorgesehen, die auf Steuersignale der stationären Überwachungseinrichtung reagieren. In der Regel sind alle diese Fahrzeuge mit einem RFID-Transponder ausgestattet, wobei es jedoch auch denkbar ist, dass einzelne Fahrzeuge keinen RFID-Transponder aufweisen.

Aufgrund der fahrzeugspezifischen Kennung ist es möglich, ein von dem Sensor erfasstes Objekt als ein bestimmtes Fahrzeug zu identifizieren und spezifische, für dieses Fahrzeug bestimmte Steuersignale für dieses Fahrzeug zu erzeugen und an dieses Fahrzeug zu übermitteln.

Im Vergleich zu anderen denkbaren Lösungen besteht ein weiterer Vorteil der Verwendung von RFID-Transpondern in einem geringen Stromverbrauch für die Kommunikation mit der Überwachungseinrichtung, was die Stromspeicher der fahrerlosen Fahrzeuge entlastet.

Vorteilhafterweise sind einem durch eine jeweilige Überwachungseinrichtung überwachten Fahrwegbereich mehrere RFID-Lesegeräte zugeordnet, so dass die Ortsauflösung bei dem Empfang von Transpondersignalen weiter verbessert ist. Dies kann insbesondere dann nützlich sein, wenn sich gleichzeitig mehrere Objekte in einem bestimmten Fahrwegbereich befinden.

Gemäß einer vorteilhaften Ausführungsform ist die Übertragungsreichweite zwischen dem RFID-Transponder eines jeweiligen Fahrzeugs und dem zumindest einen mit der Steuereinheit verbundenen RFID-Lesegerät derart begrenzt, dass nur Transpondersignale von Fahrzeugen empfangen werden, welche sich innerhalb des überwachten Fahrwegbereichs oder eines Teilbereichs davon befinden.

Dadurch wird eine Fehlzuordnung und/oder Fehlidentifikation von Fahrzeugen vermieden, die sich weit entfernt von der stationären Überwachungseinrichtung befinden.

Gemäß einer weiteren vorteilhaften Ausführungsform ist der Sensor ferner zum Bestimmen einer ersten Positionsinformation über ein detektiertes Objekt und zum Übermitteln der ersten Positionsinformation an die Steuereinheit eingerichtet, wobei die Steuereinheit dazu eingerichtet ist, das Steuersignal ferner auf der Grundlage der ersten Positionsinformation zu erzeugen. Hierfür ist der Sensor vorteilhafterweise als Laserscanner, insbesondere als ein abstandsmessender Laserscanner ausgebildet. Die erste Positionsinformation kann zum Beispiel einen Abstand und/oder eine Winkelposition des Objekts in Bezug auf den Sensor oder auch eine Absolutposition in Bezug auf den Fahrwegbereich umfassen. Hierdurch wird die Genauigkeit bei der Identifizierung von erfassten Objekten nochmals verbessert.

Gemäß einer weiteren vorteilhaften Ausführungsform ist die Steuereinheit dazu eingerichtet, auf der Grundlage eines jeweiligen empfangenen Transpondersignals eine zweite Positionsinformation über das Fahrzeug, dessen zugeordneter RFID-Transponder dieses Transpondersignal übertragen hat, zu ermitteln, wobei die Steuereinheit dazu eingerichtet ist, das Steuersignal ferner auf der Grundlage der zweiten Positionsinformation zu erzeugen. Beispielsweise kann die zweite Positionsinformation bei Verwendung von mehreren RFID-Lesegeräten durch einen Vergleich der empfangenen Transpondersignale gewonnen werden. So kann etwa ausgewertet werden, von welchen der zugeordneten RFID-Lesegeräte ein bestimmtes Transpondersignal empfangen wurde. Auch eine Berücksichtigung der Signalstärken, die beispielsweise ein Vergleich der Signalstärken bei mehreren RFID-Lesegeräten oder eines Absolutwerts bei nur einem einzigen Lesegerät, kann vorgesehen sein.

Gemäß einer vorteilhaften Weiterbildung der beiden vorstehend genannten Ausführungsformen kann die Steuereinheit dazu eingerichtet sein, die erste und die zweite Positionsinformation miteinander zu verknüpfen, um weitere Informationen über ein detektiertes Objekt zu ermitteln. Dadurch kann die Genauigkeit bei der Kategorisierung oder Identifizierung und/oder der Positionsbestimmung eines erfassten Objekts weiter verbessert werden.

Gemäß einer weiteren vorteilhaften Ausführungsform weist die Überwachungseinrichtung zumindest eine Kommunikationsvorrichtung auf, welche dazu eingerichtet ist, Signale drahtlos an die fahrerlosen Fahrzeuge zu übermitteln.

Gemäß einer Weiterbildung dieser Ausführungsform ist die genannte Kommunikationsvorrichtung zur drahtlosen Kommunikation in einem lokalen Funknetz eingerichtet. Ein derartiges lokales Funknetz wird auch als WLAN bezeichnet. Die Reichweite der Kommunikationsvorrichtung kann hierbei größer sein als die Reichweite zwischen dem oder den RFID-Lesegeräten und einem RFID-Transponder eines jeweiligen Fahrzeugs. Die drahtlose Kommunikation erfolgt vorteilhafterweise zumindest unidirektional in Richtung von der Überwachungseinheit zu den Fahrzeugen, wobei eine bidirektionale Kommunikation bevorzugt ist.

Gemäß einer besonders bevorzugten Ausgestaltung der vorstehend genannten Ausführungsform und der vorstehend genannten Weiterbildung umfasst die genannte Kommunikationsvorrichtung einen RFID-Transponder. In dem Fall weist also die Überwachungseinrichtung also ebenfalls zumindest einen RFID-Transponder auf, welcher vorteilhafterweise mit der Steuereinheit verbunden ist und Transpondersignale überträgt, die von einem entsprechenden RFID-Lesegerät eines fahrerlosen Fahrzeugs empfangen werden können. Die Überwachungseinrichtung kann insbesondere auch zwei Kommunikationsvorrichtungen aufweisen, d.h. beispielsweise eine WLAN-Kommunikationsvorrichtung und einen RFID-Transponder. Die Steuereinheit kann Nachrichten an den angeschlossenen RFID-Transponder übermitteln, auf deren Grundlage die Transpondersignale erzeugt werden. Die Übertragung von Steuersignalen über RFID-Transponder in der Überwachungseinrichtung an das Lesegerät eines fahrerlosen Fahrzeuges ist insbesondere günstig, da es oft ausreicht, sehr kurze Nachrichten zu übertragen. So können zum Beispiel Steuersignale als einfache Zahlencodes (1, 2, 3, ...) übermittelt werden, die dann im Lesegerät des fahrerlosen Fahrzeuges zum Beispiel mit Hilfe einer look-up-table in Steuersignale (Anhalten, langsamer fahren, ....) umgesetzt werden.

Gemäß einer weiteren vorteilhaften Ausführungsform der Erfindung umfassen die von der Kommunikationsvorrichtung übermittelten Signale eine die Überwachungseinrichtung identifizierende Kennung und/oder das Steuersignal. Für die Übermittlung von Signalen durch die mit der Überwachungseinrichtung verbundene Kommunikationsvorrichtung ergeben sich insbesondere die folgenden Möglichkeiten:
- Die Kommunikationsvorrichtung übermittelt Signale, insbesondere Steuersignale, an die Fahrzeuge ausschließlich über das lokale Funknetz (WLAN). Eine Kennung wird nicht übermittelt.
- Weiterhin können wie vorstehend erwähnt Signale, insbesondere Steuersignale, an die Fahrzeuge über das lokale Funknetz (WLAN) übermittelt werden, wobei zusätzlich eine Kennung der Überwachungseinrichtung über einen RFID-Transponder der Überwachungseinrichtung an ein entsprechendes RFID-Lesegerät des Fahrzeugs übertragen wird.
- Ferner können auch Signale, insbesondere Steuersignale, für die Fahrzeuge und eine Kennung der Überwachungseinrichtung beide über den RFID-Transponder der Überwachungseinrichtung an die Fahrzeuge ermittelt werden. In dem Fall kann ein von dem RFID-Transponder mittels der Transpondersignale übertragener Code variabel sein, d.h. der Code kann unterschiedliche Telegramme oder Nachrichten umfassen.
- Grundsätzlich können jedoch auch Signale, insbesondere Steuersignale, für die Fahrzeuge und eine Kennung der Überwachungseinrichtung beide über das lokale Funknetz (WLAN) übertragen werden.

Weitere vorteilhafte Ausgestaltungen der Erfindung ergeben sich aus den Unteransprüchen, der Beschreibung und den Zeichnungen.

Die Erfindung wird nachfolgend anhand eines Ausführungsbeispiels mit Bezug auf die Figur beschrieben.

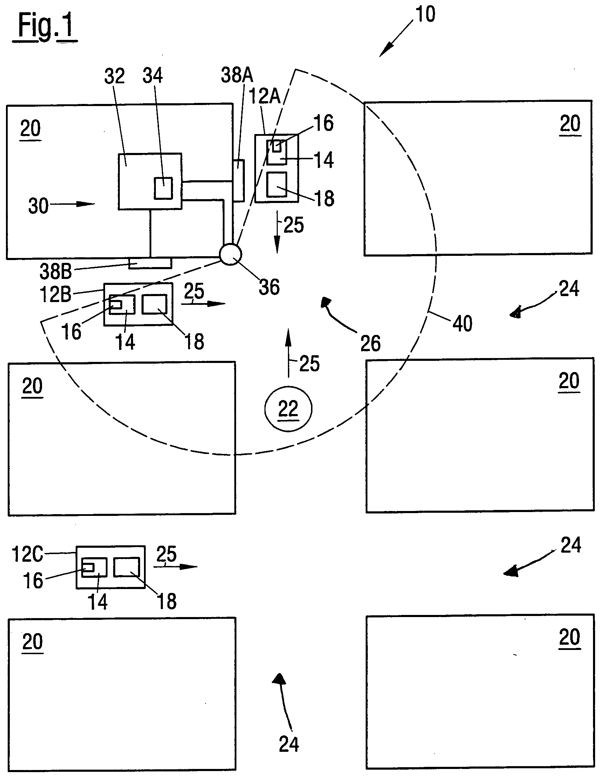

- Fig. 1: zeigt schematisch eine Szene, in welcher ein fahrerloses Transportsystem gemäß einer Ausführungsform der Erfindung betrieben wird.

Eine Umgebung oder Szene 10, in welcher ein fahrerloses Transportsystem gemäß einem Ausführungsbeispiel der vorliegenden Erfindung betrieben wird, umfasst mehrere Hindernisse 20, beispielsweise Maschinen, Lagerbehälter, Gebäude oder Gebäudeteile, zwischen denen mehrere sich kreuzende Fahrwege 24 hindurchführen.

Das fahrerlose Transportsystem umfasst mehrere fahrerlose Fahrzeuge 12A bis 12C, welche jeweils ein Steuersystem oder eine Fahrzeugsteuerung 14 zur Steuerung des jeweiligen Fahrzeugs 12A bis 12C durch die Szene umfassen. Die Fahrzeuge 12A bis 12C können ferner zumindest einen jeweiligen, mit der Fahrzeugsteuerung 14 verbundenen Überwachungssensor (nicht dargestellt) zur Überwachung einer Fahrzeugumgebung aufweisen.

Die Fahrzeugsteuerung 14 ist mit einem Kommunikationsgerät 16 verbunden, welches zumindest zum Empfang von drahtlos übermittelten Signalen, insbesondere Steuersignalen, ausgelegt ist. Die Fahrzeuge 12A bis 12C weisen ferner einen jeweiligen RFID-Transponder 18 auf, welcher in an sich bekannter Weise auf Anforderung durch ein RFID-Lesegerät ein Transpondersignal überträgt, welches zumindest eine fahrzeugspezifische Kennung umfasst.

Die Fahrzeuge 12A bis 12C bewegen sich in jeweiligen, in Fig. 1 durch Pfeile 25 angedeuteten, Fahrrichtungen auf den Fahrwegen 24.

An einem der Hindernisse 20 ist eine stationäre Überwachungseinrichtung 30 vorgesehen, welche eine zentrale Steuereinheit 32 umfasst. Die Steuereinheit 32 ist mit einer Kommunikationsvorrichtung 34 verbunden, welche dazu eingerichtet ist, zumindest Signale, insbesondere Steuersignale, drahtlos an ein oder mehrere der Fahrzeuge 12A bis 12C zu übermitteln. Vorteilhafterweise ist die Kommunikationsvorrichtung 34 auch zum Empfangen von Signalen eingerichtet, die von einem Kommunikationsgerät 16 eines jeweiligen Fahrzeugs 12A bis 12C ausgesendet werden. Vorzugsweise sind die Kommunikationsvorrichtung 34 und die Kommunikationsgeräte 16 zur drahtlosen Kommunikation in einem lokalen Funknetz, zum Beispiel nach einem Standard der Normfamilie IEEE-802.11 (WLAN) eingerichtet. Die Kommunikationsvorrichtung 34 kann in die Steuereinheit 32 integriert sein.

Die Überwachungseinrichtung 30 ist mit einem Sensor 36 verbunden, der dazu eingerichtet ist, die Anwesenheit von Objekten in einem Fahrwegbereich 26 zu detektieren. Der Sensor 36 kann beispielsweise ein optischer Sensor, insbesondere Laserscanner, sein und ist vorzugsweise zur ortsaufgelösten Erfassung von Objekten eingerichtet. Ein Erfassungsbereich 40 des Sensors 36 ist durch eine gestrichelte Linie angedeutet.

Durch die Überwachungseinrichtung 30 ist es möglich, auch solche Bereiche der Fahrwege 24 zu überwachen, die von an den Fahrzeugen 12A bis 12C angeordneten Überwachungssensoren nicht oder erst zu einem sehr späten Zeitpunkt einsehbar sind. So können sich beispielsweise die Fahrzeuge 12A und 12B in der in Fig. 1 dargestellten Situation nicht direkt "sehen", werden jedoch beide von dem Sensor 36 erfasst.

Die Steuereinheit 32 ist ferner mit zwei RFID-Lesegeräten 38A, 38B verbunden, welche an verschiedenen Seiten des die Überwachungseinrichtung 30 aufweisenden Hindernisses 20 im Bereich der jeweiligen Fahrwege 24 angeordnet sind. Die RFID-Lesegeräte 38A, 38B können regelmäßig Anforderungen zur Aussendung von Transpondersignalen aussenden.

Nachfolgend wird ein beispielhaftes Betriebsszenario beschrieben. Die Fahrzeuge 12A und 12B sowie eine Person 22 nähern sich in den durch Pfeile angegebenen Richtungen dem von der Überwachungseinrichtung 30 überwachten Fahrwegbereich 26. Sobald sie in den Erfassungsbereich 40 eintreten, werden sie von dem Sensor 36 als jeweilige Objekte erfasst. Der Sensor 36 bzw. die damit verbundenen Steuereinheit 32 sind jedoch nicht in der Lage, alleine aufgrund der von dem Sensor 36 erzeugten Erfassungssignale zu unterscheiden, ob es sich bei den erfassten Objekten um Fahrzeuge oder Personen handelt.

Sobald jedoch Fahrzeuge in die Nähe der RFID-Lesegeräte 38A, 38B gelangen, können die RFID-Lesegeräte 38A, 38B jeweilige Transpondersignale von den RFID-Transpondern 18 der Fahrzeuge 12A, 12B empfangen, wobei die Transpondersignale jeweilige fahrzeugspezifische Kennungen umfassen, die eine Identifizierung der einzelnen Fahrzeuge 12A bis 12C ermöglichen. Da die Position der RFID-Lesegeräte 38A, 38B innerhalb der Szene 10 bekannt ist, kann die Steuereinheit 32 den auf die Fahrzeuge 12A, 12B zurückgehenden Erfassungssignalen des Sensors 36 die entsprechenden, von den jeweiligen RFID-Transpondern 18 übermittelten Kennungen zuordnen.

Für das auf die Person 22 zurückgehende Erfassungssignal des Sensors 36 kann jedoch keine Kennung zugeordnet werden, so dass die Steuereinheit 32 aufgrund dieser fehlenden Kennung davon ausgehen muss, dass es sich bei dem Objekt 22 um eine Person handeln kann, selbst wenn an dieser Stelle lediglich ein systemfremdes Fahrzeug oder ein anderes nicht menschliches Hindernis befinden würde, welches keine Transpondersignale überträgt.

Da aus Sicherheitsgründen auf jeden Fall eine Kollision mit einem derartigen nicht identifizierbaren Objekt verhindert werden muss, sendet die Steuereinheit 32 über die Kommunikationsvorrichtung 34 Steuersignale an die Fahrzeuge 12A, 12B aus, die einen Befehl zum sofortigen Anhalten umfassen. Diese Steuerbefehle können die spezifischen Kennungen der Fahrzeuge 12A, 12B umfassen, so dass die Fahrzeugsteuerungen 14 nur dann auf diese Steuersignale reagieren, wenn eine jeweilige mit den Steuersignalen ausgesendete Kennung mit der Kennung des der empfangenden Fahrzeugsteuerung 14 zugeordneten Fahrzeugs entspricht.

So kann zwar auch das Fahrzeug 12C ein Steuersignal mit dem Befehl zum Anhalten empfangen. Da jedoch die Kennung des Fahrzeugs 12C nicht in diesem Steuersignal umfasst ist, wird die Fahrzeugsteuerung 14 nicht auf dieses Steuersignal reagieren. Das Fahrzeug 12C befindet sich nicht in dem überwachten Fahrwegbereich und nähert sich diesem auch nicht an. Somit kann das Fahrzeug 12C seinen Weg unbeeinflusst fortsetzen.

Wenn der Sensor 36 feststellt, dass sich die Person 22 nicht mehr im Fahrwegbereich 26 befindet, kann es anschließend entsprechende Steuerbefehle an die Fahrzeuge 12A, 12B übermitteln, die diesen die Erlaubnis geben, ihre Fahrt fortzusetzen. Um eine Kollision zwischen den Fahrzeugen 12A, 12B zu vermeiden, kann die Steuereinheit 32 eine Reihenfolge festlegen, in welcher die Fahrzeuge 12A, 12B ihre Fahrt fortsetzen dürfen.

Gemäß einer Abwandlung kann die Kommunikationsvorrichtung 34 ebenfalls als ein RFID-Transponder ausgebildet sein. Entsprechend sind in dem Fall die Kommunikationsgeräte 16 der Fahrzeuge 12A bis 12C als RFID-Lesegeräte ausgebildet. Zwischen den Fahrzeugen 12A bis 12C und der Überwachungseinrichtung 30 besteht demnach eine bidirektionale RFID-Verbindung, so dass in beiden Richtungen Signale, insbesondere Steuersignale und/oder Kennungen, ausgetauscht werden können.

Gemäß einer weiteren Abwandlung können die Fahrzeugsteuerung 14 und der RFID-Transponder 18 eines jeweiligen Fahrzeugs 12A bis 12C miteinander verbunden sein. Dadurch können die RFID-Transponder 18 nicht nur fest programmierte Kennungen, sondern auch zusätzliche Informationen oder Daten, die sie von der Fahrzeugsteuerung 14 übermittelt bekommen, übertragen.

### Bezugszeichenliste

- 10: Szene
- 12A - 12C: Fahrzeug
- 14: Fahrzeugsteuerung
- 16: Kommunikationsgerät
- 18: RFID-Transponder
- 20: Hindernis
- 22: Person
- 24: Fahrweg
- 25: Bewegungsrichtung
- 26: Fahrwegbereich
- 30: Überwachungseinrichtung
- 32: Steuereinheit
- 34: Kommunikationsvorrichtung
- 36: Sensor
- 38A, 38B: RFID-Lesegerät
- 40: Erfassungsbereich

## Patentansprüche

1. Fahrerloses Transportsystem zum Transport von Waren und/oder Personen, umfassend:
mehrere fahrerlose Fahrzeuge (12A - 12C), und
zumindest eine stationäre Überwachungseinrichtung (30) zur Überwachung eines jeweiligen Fahrwegbereiches (26), wobei die Überwachungseinrichtung (30) wenigstens einen Sensor (36), der dazu eingerichtet ist, die Anwesenheit von Objekten in dem Fahrwegbereich (26) zu detektieren und ein Erfassungssignal auszugeben, wenn sich ein Objekt in dem Fahrwegbereich (26) befindet, und eine mit dem Sensor (36) verbundene Steuereinheit (32) umfasst, welche dazu eingerichtet ist, das Erfassungssignal von dem Sensor (36) zu empfangen und auf der Grundlage zumindest des Erfassungssignals ein Steuersignal für zumindest eines der fahrerlosen Fahrzeug (12A - 12C) zu erzeugen,
**dadurch gekennzeichnet,**
**dass** zumindest eines der fahrerlosen Fahrzeuge (12A - 12C) einen RFID-Transponder (18) umfasst, welcher dazu eingerichtet ist, ein Transpondersignal zu übertragen, welches zumindest eine fahrzeugspezifische Kennung umfasst, und
**dass** die Überwachungseinrichtung (30) ferner zumindest ein mit der Steuereinheit (32) verbundenes RFID-Lesegerät (38A, 38B) umfasst, welches zum Empfangen eines von dem RFID-Transponder (18) übertragenen Transpondersignals eingerichtet ist,
wobei die Steuereinheit (32) dazu eingerichtet ist, das Steuersignal ferner auf der Grundlage des empfangenen Transpondersignals zu erzeugen, und
wobei die Überwachungsvorrichtung bei Vorliegen eines Erfassungssignales des Sensors (36) davon ausgeht, dass es sich bei dem erfassten Objekt um ein Fahrzeug handelt, wenn zugleich ein Transpondersignal des erfassten Objektes empfangen wird, und wobei die Überwachungsvorrichtung bei Vorliegen eines Erfassungssignales des Sensors (36) annimmt, dass es sich bei dem erfassten Objekt um eine Person handelt, wenn nicht zugleich ein Transpondersignal empfangen wird oder das Transpondersignal aus einem Bereich empfangen wird, der nicht mit dem Bereich übereinstimmt, in welchem der Sensor (36) das Objekt detektiert hat.

2. Transportsystem nach Anspruch 1,
**dadurch gekennzeichnet,**
**dass** die Übertragungsreichweite zwischen dem RFID-Transponder (18) eines jeweiligen Fahrzeugs und dem mit der Steuereinheit (32) verbundenen RFID-Lesegerät (38A, 38B) derart begrenzt ist, dass nur Transpondersignale von Fahrzeugen (12A - 12C) empfangen werden, welche sich innerhalb des überwachten Fahrwegbereichs (26) befinden.

3. Transportsystem nach Anspruch 1 oder 2,
**dadurch gekennzeichnet,**
**dass** der Sensor (36) ferner zum Bestimmen einer ersten Positionsinformation über ein detektiertes Objekt und zum Übermitteln der ersten Positionsinformation an die Steuereinheit (32) eingerichtet ist, wobei die Steuereinheit (32) dazu eingerichtet ist, dass Steuersignal ferner auf der Grundlage der ersten Positionsinformation zu erzeugen.

4. Transportsystem nach einem der vorhergehenden Ansprüche,
**dadurch gekennzeichnet,**
**dass** die Steuereinheit (32) dazu eingerichtet ist, auf der Grundlage eines jeweiligen empfangenen Transpondersignals eine zweite Positionsinformation über das Fahrzeug (12A - 12C), dessen zugeordneter RFID-Transponder (18) dieses Transpondersignal ausgesendet hat, zu ermitteln, wobei die Steuereinheit (32) dazu eingerichtet ist, das Steuersignal ferner auf der Grundlage der zweiten Positionsinformation zu erzeugen.

5. Transportsystem nach Anspruch 3 und 4,
**dadurch gekennzeichnet,**
**dass** die Steuereinheit (32) dazu eingerichtet ist, ist die erste und die zweite Positionsinformation miteinander zu verknüpfen, um weitere Informationen über ein detektiertes Objekt zu ermitteln.

6. Transportsystem nach einem der vorhergehenden Ansprüche,
**dadurch gekennzeichnet,**
**dass** die Überwachungseinrichtung (30) zumindest eine Kommunikationsvorrichtung (34) aufweist, welche dazu eingerichtet ist, Signale drahtlos an die fahrerlosen Fahrzeuge (12A - 12C) zu übermitteln.

7. Transportsystem nach Anspruch 6,
**dadurch gekennzeichnet,**
**dass** zumindest eine Kommunikationsvorrichtung (34) zur drahtlosen Kommunikation in einem lokalen Funknetz eingerichtet ist.

8. Transportsystem nach Anspruch 6 oder 7,
**dadurch gekennzeichnet,**
**dass** zumindest eine Kommunikationsvorrichtung (34) einen RFID-Transponder umfasst.

9. Transportsystem nach einem der Ansprüche 6 bis 8,
**dadurch gekennzeichnet,**
**dass** die von der Kommunikationsvorrichtung (34) übermittelten Signale eine die Überwachungseinrichtung (30) identifizierende Kennung und/oder das Steuersignal umfassen.

## Claims

1. A driverless transport system for transporting goods and/or persons comprising:
a plurality of driverless vehicles (12A - 12C); and
at least one stationary monitoring device (30) for monitoring a respective travel path zone (26), wherein the monitoring device (30) comprises at least one sensor (36) which is configured to detect the presence of objects in the travel path zone (26) and to output a detection signal when an object is located in the travel path zone (26); and a control unit (32) which is connected to the sensor (36) and which is configured to receive the detection signal from the sensor (36) and to generate a control signal for at least one of the driverless vehicles (12A - 12C) based at least on the detection signal,
**characterized in that**
at least one of the driverless vehicles (12A - 12C) comprises an RFID transponder (18) which is configured to transmit a transponder signal which comprises at least one vehicle-specific identifier; and
**in that** the monitoring device (30) furthermore comprises at least one RFID reading device (38A, 38B) which is connected to the control unit (32) and which is configured to receive a transponder signal transmitted by the RFID transponder (18),
with the control unit (32) being configured to furthermore generate the control signal on the basis of the received transponder signal, and with the monitoring device assuming on the presence of a detection signal of the sensor (36) that the detected object is a vehicle if a transponder signal of the detected object is simultaneously received, and with the monitoring device assuming on the presence of a detection signal of the sensor (36) that the detected object is a person if a transponder signal is not simultaneously received or the transponder signal is received from a zone which does not coincide with the zone in which the sensor (36) detected the object.

2. A transport system in accordance with claim 1,
**characterized in that**
the transmission range between the RFID transponder (18) of a respective vehicle and the RFID reading device (38A, 38B) connected to the control unit (32) is limited such that transponder signals are only received from vehicles (12A - 12C) which are located within the monitored travel path zone (26).

3. A transport system in accordance with claim 1 or claim 2,
**characterized in that**
the sensor (36) is furthermore configured to determine a first piece of position information on a detected object and to transmit the first piece of position information to the control unit (32), with the control unit (32) being configured to furthermore generate the control signal on the basis of the first piece of position information.

4. A transport system in accordance with any one of the preceding claims,
**characterized in that**
the control unit (32) is configured to determine a second piece of position information on the vehicle (12A - 12C) on the basis of a respective received transponder signal, the associated RFID transponder (18) of said vehicle (12A - 12C) having transmitted this transponder signal, with the control unit (32) being configured to furthermore generate the control signal on the basis of the second piece of position information.

5. A transport system in accordance with claim 3 and claim 4,
**characterized in that**
the control unit (32) is configured to link the first and second pieces of position information with one another to determine further information on a detected object.

6. A transport system in accordance with any one of the preceding claims,
**characterized in that**
the monitoring device (30) has at least one communication apparatus (34) which is configured to transmit signals wirelessly to the driverless vehicles (12A-12C).

7. A transport system in accordance with claim 6,
**characterized in that**
at least one communication apparatus (34) is configured for wireless communication in a local radio network.

8. A transport system in accordance with claim 6 or claim 7,
**characterized in that**
at least one communication apparatus (34) comprises an RFID transponder.

9. A transport system in accordance with any one of the claims 6 to 8,
**characterized in that**
the signals transmitted by the communication apparatus (34) comprise an identifier identifying the monitoring device (30); and/or the control signal.

## Revendications

1. Système de transport sans conducteur, destiné à transporter des marchandises et/ou des personnes, comportant :
plusieurs véhicules (12A - 12C) sans conducteur, et
au moins un dispositif de surveillance (30) stationnaire pour surveiller une zone respective (26) du trajet de déplacement, le dispositif de surveillance (30) comprenant au moins un capteur (36) qui est conçu pour détecter la présence d'objets dans la zone (26) du trajet de déplacement et pour émettre un signal de détection lorsqu'un objet se trouve dans la zone (26) du trajet de déplacement, ainsi qu'une unité de commande (32) connectée au capteur (36) et conçue pour recevoir le signal de détection en provenance du capteur (36) et pour générer un signal de commande pour l'un au moins des véhicules (12A - 12C) sans conducteur en se basant au moins sur ledit signal de détection,
**caractérisé en ce que**
au moins un des véhicules (12A - 12C) sans conducteur comprend un transpondeur RFID (18) qui est conçu pour transmettre un signal de transpondeur qui inclut au moins un identifiant spécifique au véhicule, et **en ce que**
le dispositif de surveillance (30) comprend en outre au moins un appareil de lecture RFID (38A, 38B) connecté à l'unité de commande (32) et conçu pour recevoir un signal de transpondeur transmis par le transpondeur RFID (18), et
l'unité de commande (32) est conçue pour générer le signal de commande en outre en se basant sur le signal de transpondeur reçu, et
en présence d'un signal de détection du capteur (36), le dispositif de surveillance suppose que l'objet détecté est un véhicule lorsqu'en même temps, un signal de transpondeur de l'objet détecté est reçu, et
en présence d'un signal de détection du capteur (36), le dispositif de surveillance suppose que l'objet détecté est une personne lorsqu'un signal de transpondeur n'est pas reçu en même temps ou que le signal de transpondeur est reçu en provenance d'une zone qui ne coïncide pas avec la zone dans laquelle le capteur (36) a détecté l'objet.

2. Système de transport selon la revendication 1,
**caractérisé en ce que**
la portée de transmission entre le transpondeur RFID (18) d'un véhicule respectif et l'appareil de lecture RFID (38A, 38B) connecté à l'unité de commande (32) est limitée de telle sorte que seulement des signaux de transpondeur sont reçus de véhicules (12A - 12C) qui se trouvent à l'intérieur de la zone surveillée (26) du trajet de déplacement.

3. Système de transport selon la revendication 1 ou 2,
**caractérisé en ce que**
le capteur (36) est en outre conçu pour déterminer une première information de position relative à un objet détecté et pour transmettre la première information de position à l'unité de commande (32), l'unité de commande (32) étant conçue pour générer le signal de commande en outre en se basant sur la première information de position.

4. Système de transport selon l'une des revendications précédentes,
**caractérisé en ce que**
l'unité de commande (32) est conçue pour déterminer une seconde information de position relative au véhicule (12A - 12C) en se basant sur un signal de transpondeur reçu respectif, véhicule dont le transpondeur RFID associé (18) a émis ledit signal de transpondeur, l'unité de commande (32) étant conçue pour générer le signal de commande en outre en se basant sur la seconde information de position.

5. Système de transport selon la revendication 3 et 4,
**caractérisé en ce que**
l'unité de commande (32) est en outre conçue pour lier la première et la seconde information de position l'une avec l'autre, en vue de déterminer d'autres informations relatives à un objet détecté.

6. Système de transport selon l'une des revendications précédentes,
**caractérisé en ce que**
le dispositif de surveillance (30) comprend au moins un dispositif de communication (34) conçu pour transmettre sans fil des signaux aux véhicules (12A - 12C) sans conducteur.

7. Système de transport selon la revendication 6,
**caractérisé en ce que**
au moins un dispositif de communication (34) est conçu pour la communication sans fil dans un réseau radio local.

8. Système de transport selon la revendication 6 ou 7,
**caractérisé en ce que**
au moins un dispositif de communication (34) comprend un transpondeur RFID.

9. Système de transport selon l'une des revendications 6 à 8,
**caractérisé en ce que**
les signaux transmis par le dispositif de communication (34) incluent un identifiant qui identifie le dispositif de surveillance (30) et/ou incluent le signal de commande.
